# EUROPEAN PATENT SPECIFICATION

(11) **EP 3 946 997 B1**
(45) Date of publication and mention of the grant of the patent: **14.08.2024**
(21) Application number: 20723190.3
(22) Date of filing: 30.03.2020
(51) Int. Cl.: B60K 1/04, B60K 6/387, B60K 6/445, F16H 3/091, F16H 37/04, B60K 6/26, B60K 6/365, B60K 6/40, B60K 6/547, B60K 17/28, B60W 10/06, B60W 10/08, B60W 10/11, B60W 10/115, B60W 10/26, B60W 20/30, B60W 30/188, B60K 6/28

(54) **HYBRID TRANSMISSION UNIT FOR A TRACTOR AND TRACTOR COMPRISING THE SAME**
HYBRIDGETRIEBEEINHEIT FÜR EINEN TRAKTOR UND TRAKTOR DAMIT
UNITÉ DE TRANSMISSION HYBRIDE POUR UN TRACTEUR ET TRACTEUR LA COMPRENANT

(30) Priority: 29.03.2019 IT 201900004719
(43) Date of publication of application: 09.02.2022
(73) Proprietor: Ecothea S.r.l., 10129 Torino (IT)
(72) Inventor: SOMA', Aurelio, 10129 Torino (IT)
(74) Representative: Mola, Edoardo
(86) International application number: PCT/IB2020/052993
(87) International publication number: WO 2020/201978

(56) References cited:
- EP-A2- 1 317 050
- WO-A1-2009/092195
- DE-A1- 102016 124 705
- DE-A1- 102017 205 119
- DE-A1- 19 749 074
- US-A1- 2008 011 553
- US-A1- 2013 218 394

## Description

### TECHNICAL FIELD

The present invention relates to a hybrid drivetrain for a tractor, in particular for a compact specialized tractor with reduced pitch.

### STATE OF THE ART

There is a need to provide low pollution agricultural tractors and, at the same time, light, easy to handle and reliable tractors. In particular, it is useful that the speed of a tractor PTO is decoupled from the rotation speed of an internal combustion engine of the hybrid propulsion unit and that the tractor can be fully functional with the internal combustion (IC) engine off, e.g. both the traction and the implements connected to the power take-off in a torque transmitting manner.

There is no standard solution for the optimal compromise of the sizing of the internal combustion engine and the electrical system, and the best choice includes complex compromises between power as well as between cost and performance. The power transmission configuration of a hybrid electric vehicle (HEV) can be divided into three types: series, parallel and a combination of the two. Series hybrid electric vehicles (SHEV) include an internal combustion engine (ICE), a generator, battery packs, capacitors and electric motors. SHEVs do not have mechanical connections between the ICE and the wheels. The series hybrid configuration is mainly used in heavy vehicles, military vehicles and buses.

In a PHEV, the mechanical and electrical powers are both connected to the transmission. In the case of parallel architectures, it is possible to obtain good performance during acceleration due to the combined power of both engines. Different control strategies are used.

Furthermore, the mechanical and electrical power can be decoupled and the system has a high operating flexibility which allows three operating modes: purely combustion; purely electric and hybrid.

In the series-parallel hybrid configuration it is possible to highlight two main power paths. In the mechanical power path, the energy generated by the combustion engine is transmitted directly to the wheels while in the electric path the energy generated by the IC engine is converted first into electrical energy by means of the generator and then again converted into mechanical energy applied to the wheels. It is therefore possible to have mixed architectures called "power splits" in which the installed power is split by means of mechanical couplers. The combination of parallel and series hybrid configurations is further divided into subcategories based on how power is distributed.

D1 (DE 197 49 074 A1) discloses an agricultural tractor comprising an internal combustion engine coupled to the vehicle drive via an electromechanical transmission with a generator, an electric motor and a mechanical gearing. The engine output shaft and the electric motor armature shaft is coupled to respective inputs of a summation transmission, i.e. a single-stage planetary gear, driving the mechanical gearing on the output side.

Conceptual applicative sketches of the layout alternatives mentioned above are known but the need is felt to find a construction solution suitable for mass production and having little or no impact on the architectures of tractors already on the market.

### SCOPES AND SUMMARY OF THE INVENTION

The scope of the present invention is achieved by means of a hybrid drivetrain for a tractor comprising an internal combustion engine having an output shaft connected to a first disengageable joint, for example a clutch or freewheel; a first electric machine having a first rotor rigidly connected to a drive shaft disconnectable from the output shaft through the first joint; a second electric machine having a second rotor rigidly connected to a hollow shaft which houses the transmission shaft; a spacer shaft connected to the transmission shaft and disconnectable via a second joint, for example a clutch, from a PTO shaft; a planetary gear having: a first stage crown gear configured to be permanently rotationally fixed; a first stage sun gear rigidly connected to the hollow shaft; a plurality of first stage planet gears carried by a second stage crown gear; a second stage sun gear permanently connected to the drive shaft; a plurality of second stage planet gears connected in torque transfer to a propulsion device, e.g. to a gearbox or differential, of the vehicle via a second stage tractor carrier; wherein the first electric machine is opposite to the planetary gear with respect to the second electric machine and the internal combustion engine, the first electric machine, the second electric machine and the gear module are connected frontally in sequence to define an overall oblong body.

A hybrid drivetrain according to the previous layout is compact both in the transversal direction to the output and transmission shafts and in the longitudinal direction, so that it can be installed on a tractor already designed for a diesel engine of equal overall nominal power, replacing this the latter and traditional reduction gears, to drive the traction wheels or tracks and the power take-off and / or a hydraulic pump to feed the tractor's optional towed agricultural equipment such as, for example, a sprayer, a forage harvester or a rotary harrow. The compactness thus obtained makes the hybrid drivetrain particularly suitable also for light tractors with an installed power not exceeding 150 kW and also for smaller tractors with an installed power not exceeding 100 kW. Furthermore, both the power take-off and / or the hydraulic pump and the wheels or tracks of the tractor can be driven when the internal combustion engine is switched off. In particular, a transmission ratio between the second stage sun gear and the drive shaft is fixed, preferably in direct drive, even more preferably the second stage sun gear and the drive shaft are coaxial.

According to a preferred embodiment, the carrier is connected to a gearbox configured for reducing the number of revolutions to obtain a low speed gear of the tractor. For example, the gear shift is discrete with a primary shaft and a secondary shaft. Preferably the gearbox is small in size with two or three speed ratios including a reduced speed gear and a direct drive. Optionally, a reverse gear can also be provided. Alternatively, the reverse drive can be electric by reversing the rotation of the electric machines. To further reduce the dimension, the gearbox can be obtained by means of a hydraulically switched two-stage planetary gear or with electromagnetic clutches. According to a preferred embodiment, the spacer shaft is housed inside the primary shaft. In this way the compactness increases since no gearboxes are needed. According to a preferred embodiment, the planetary gear and the discrete gear speed change gear are inside a casing and the primary shaft is connected to the first stage sun gear via a first rolling bearing and is supported by the casing through a second rolling bearing and the second stage crown comprises a cantilevered sleeve supported by a third rolling bearing arranged between the first and second rolling bearings in an axial direction.

The casing is preferably a casting of a metal alloy, for example cast iron, or other appropriate material and is sufficiently reinforced to withstand the torque constraint reaction applied via the second stage crown and as a structural frame for the tractor. The casing is rigidly fixed to the main body of the internal combustion engine so as to make the already pre-assembled propulsion unit installable on a tractor according to traditional assembly processes along the production line. In particular, the oblong layout of the propulsion unit split into functional segments connected to each other frontally, e.g. the internal combustion engine, the first electric machine, the second electric machine and the gear module, also provides a central load-bearing body of the tractor, to which front and rear appendages are connected to mount the wheels or tracks, the three-point linkage, etc. and on which the cab or driver's seat rests. According to a preferred embodiment, the drive shaft and the spacer shaft are both connected by means of splines to the second stage sun gear. This simplifies the assembly of the propulsion unit.

According to a preferred embodiment, a tractor having a driver's place includes both the hybrid drivetrain of the invention and a battery pack generally configured in an inverted U shape and surrounding the first electric machine, being also bordered by the driver's space. Preferably anterior to the driver's cab, but possibly also posteriorly. It should be noted that the first and second electric machines have very high power densities and are therefore compact. In addition, the internal combustion engine has a lower displacement than that of a diesel engine of equal power to that of the overall hybrid drivetrain. The reduced displacement of the internal combustion engine of the hybrid drivetrain frees up a space occupied by the battery pack that surrounds both the top and the side of the first electric machine. In particular, the driving position is defined in the front direction by a dividing wall in which a recess for the accelerator and brake pedals is obtained. The battery pack is placed between the internal combustion engine and the partition wall. Furthermore, the dividing wall defines a surface that can be walked on by the driver seated in the driving position and is interposed between the driver and the first and second electric machine, arranged below a seat of the driver's space.

According to a preferred embodiment of the present invention, the tractor comprises a control unit for operating the first and second joints (C1, C2) and controlling the speed of the tractor by varying the rotation speed of the internal combustion engine and / or of the first electric machine and / or of the second electric machine based on a tractor speed value set by a driver and implementing a recirculation of the electric power between the first and second electric machine while the internal combustion engine is kept in a predetermined range of operation.

In this way it is possible to obtain a hybrid operation of the tractor without excessively increasing the size and weight of the batteries.

According to a preferred embodiment, the batteries are included in a pre-assembled unit in an inverted U-shaped casing which also houses the electric and / or electronic drives of the first and second electric machines; and vibration dampers are arranged between the inverted U-shaped casing and the brackets and / or the partition wall. In this way the vibrations of the internal combustion engine are filtered and are not excessively harmful for the electric and / or electronic drives and the batteries. Further technical characteristics and advantages of the present invention will be discussed and commented on in the detailed description of the invention.

### BRIEF DESCRIPTION OF THE DRAWINGS

The present invention will be described below by means of some preferred embodiments, given as a non-limiting example, with reference to the attached drawings. These drawings illustrate different aspects and examples of the present invention and, where appropriate, structures, components, materials and / or similar elements in different figures are indicated by similar reference numbers. In particular:
- Figure 1 is a cross section of the hybrid drivetrain according to the present invention along a longitudinal plane of the tractor;
- Figure 2 is an enlarged exploded perspective view of the hybrid drivetrain of Figure 1;
- Figure 3 is a front perspective view of a tractor incorporating the hybrid drivetrain of Figure 1 and with details removed or exploded for clarity;
- Figure 4 is a diagram of the angular speeds of the different motors of the hybrid drivetrain of Figure 1;

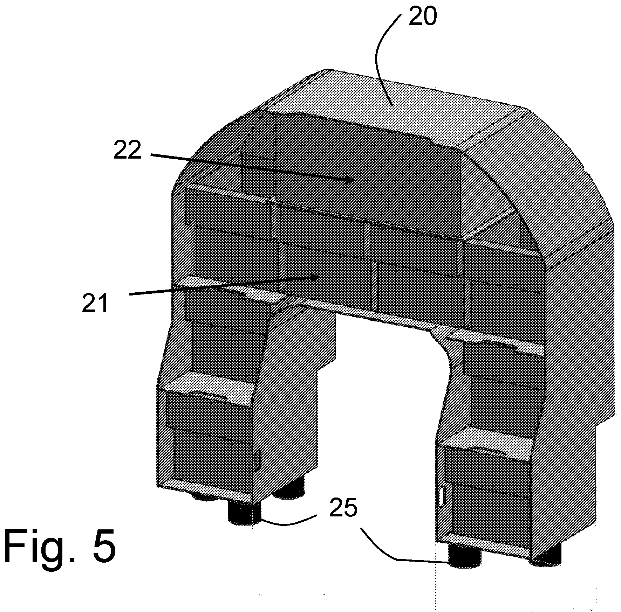

- Figure 5 is an enlarged perspective view of a component illustrated in Figure 3; and
- Figure 6 is a side view of the tractor of Figure 3 with details removed for clarity.

### DETAILED DESCRIPTION OF THE INVENTION

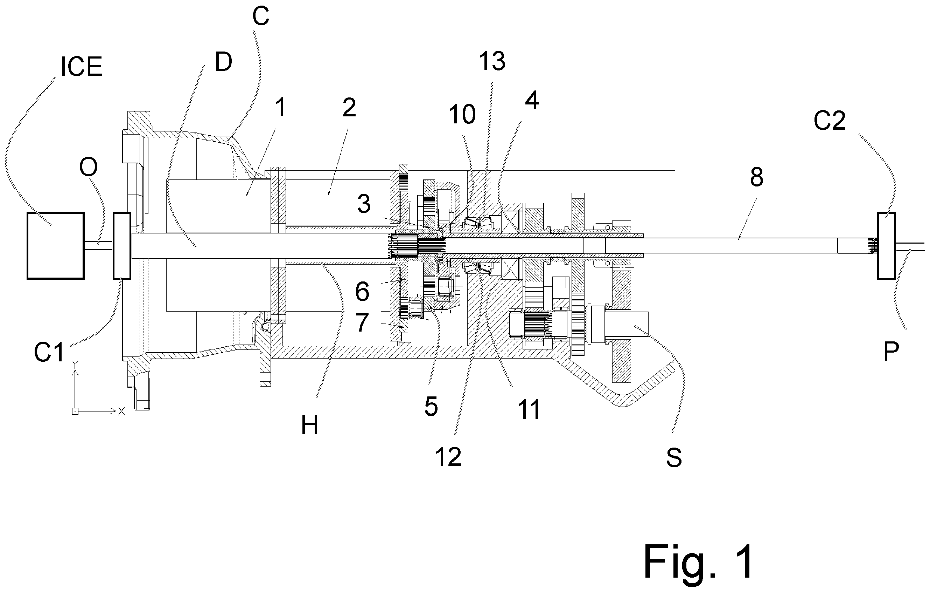

Figure 1 shows as a whole a hybrid drivetrain according to the present invention for a tractor preferably with an installed power of 75-100 kW. The hybrid drivetrain comprises substantially in-line, i.e. butt connected to each other in a direction parallel to their respective axes of rotation and / or parallel to the longitudinal axis of the tractor, an internal combustion engine, a first electric machine and a second electric machine. The hybrid drivetrain mixes power internally according to a mixed series-parallel criterion in order to achieve complete operation, i.e. traction and drive of a power take-off, when the electric motor is off; a joint functioning between internal combustion engine and electric machines for traction and / or power take-off; optionally, as will be better specified in the following, a traction and the drive of the power take-off only via the IC engine. In addition, to have the size of a battery pack relatively small, the recirculation function of the electric power is implemented, i.e. the internal combustion engine drives an electric machine operating as a generator and the electric power is directly absorbed by the second electric machine operating as an electric motor. These functions are suitably controlled via an electronic control unit and appropriate electromechanical actuators, e.g. a clutch and a brake or rotation lock.

According to the exemplary embodiment of figure 1, the internal combustion engine ICE comprises an output shaft O connected to a drive shaft D via a clutch C1. According to a preferred embodiment of the present invention, the clutch is provided downstream of a flywheel connected to a crankshaft of the ICE inside a bell connected to the body of the IC engine itself. This layout is that of a standard internal combustion engine in order to keep production costs aligned with those of a combustion engine assembled in a traditional drive unit.

The drive shaft D is the rotor of the first electric machine 1, preferably housed in a second bell C butt-connected to the clutch bell on the side of the ICE. The rotor shaft of the electric machine 1 is therefore rigidly connected in torque transmission to the drive shaft. If different speeds of rotation between ICE and electric machine 1 are required, it is possible to connect the drive shaft D to the rotor of electric machine 1 by means of a gear.

Drive shaft D also passes through a rotor of second electric machine 2 and is surrounded by a hollow shaft H rigidly connected in torque transmission to the rotor of second electric machine 2. Second electric machine 2 is fixed frontally to bell C on one side and on the other side to a gear module comprising a two-stage planetary gear, one of which is preferably made ordinary by connecting the relative crown gear to a casing housing the module itself; and a discrete-speed gearbox connected in torque transmission to a tractor differential.

In greater detail, drive shaft D is butt connected in torque transmission, preferably in direct drive, to a second stage 3 sun gear of the two-stage planetary gear. A primary shaft 4 of the gearbox with discrete speed ratios is butt connected, preferably in direct drive, to a second stage carrier of the two-stage planetary gear. A second stage crown gear 5 carries first stage planet gears that engage on a first stage sun gear 6 connected frontally in torque transmission, preferably in direct drive, to hollow shaft H. A first stage crown gear 7 is rotationally fixed and, preferably, fixed to a casing housing the gear module.

The hybrid drivetrain also comprises a power take-off P driven by a spacer shaft 8 connected frontally in torque transmission, preferably in direct drive, to second stage sun gear 3 and surrounded by the primary shaft 4, which is therefore hollow. Power take-off P can optionally be connected to spacer shaft 8 via a clutch C2, so that it can be disconnected from rotation while spacer shaft 8 is rotating.

According to the preferred embodiment of Figure 1, second stage sun gear 3 and primary shaft 4 are connected in a radial direction by means of a rolling bearing 10 preferably mounted between an cylindrical internal head surface of the second stage carrier and a cylindrical external head surface of second stage sun gear 3. Primary shaft 4 is also carried radially by an additional bearing 11 abutting on the casing housing the gear module.

Furthermore, second stage crown gear 5 comprises a bell-shaped flange converging into a cantilever sleeve 12. The latter is supported in a radial direction by the gear module casing by means of a bearing assembly 13 arranged between cantilever sleeve 12 and bearing 11 and houses primary shaft 4.

According to a preferred embodiment of the present invention, shafts D and 8 are connected on opposite sides of second stage sun gear 3 by means of respective splined couplings, at least one of which is made on a relative sleeve subsequently press fitted or connected in another equivalent way in sun gear 3. To simplify assembly, drive shaft D has a larger diameter than that of spacer shaft 8.

Optionally, the hybrid drivetrain comprises a brake or a mechanical lock of second stage crown gear 5 to allow, when in the locked condition, to drive primary shaft 4 and spacer shaft 8 without any intervention of the electric machines 1, 2, for example in case of failure of the latter.

In use the gearbox provides for no more than three speed ratios, preferably a reduced speed gear and a direct drive gear. There is also an optional reverse gear. Furthermore, in order to obtain reverse gear even in conditions of switched off electric machines, for example because of failure, the discrete speed gearbox also includes reverse gear. According to a further embodiment, reversing is performed in 'full electric' mode by disconnecting the ICE and appropriately reversing the rotation direction of the electric machines 1, 2 operating as a motor.

According to a not shown embodiment, a hydraulic pump is driven by the hybrid drivetrain of figure 1 and is preferably connected in torque transmission to spacer shaft 8 so as to be controlled both in 'full electric' and in hybrid mode, and also in a stop condition of electric machines 1, 2 as is the case for power take-off P.

The figures show a constructive embodiment of the hybrid drivetrain of figure 1 in which the ICE, first electric machine 1, second electric machine 2 and the gear module are butt-connected to define an oblong load-bearing body centrally arranged along a longitudinal axis of a tractor.

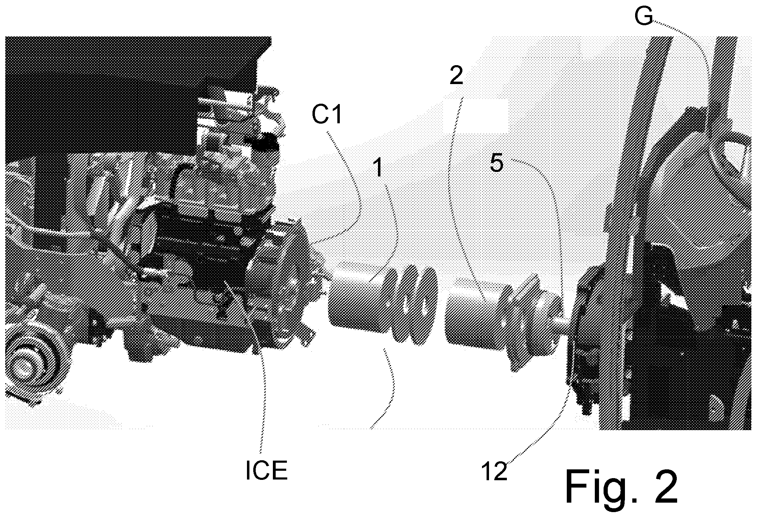

As shown in Figure 2, the gear module casing is arranged below a driving position G of the tractor and the front and rear appendages are connected to the oblong body to mount the respective wheels or tracks.

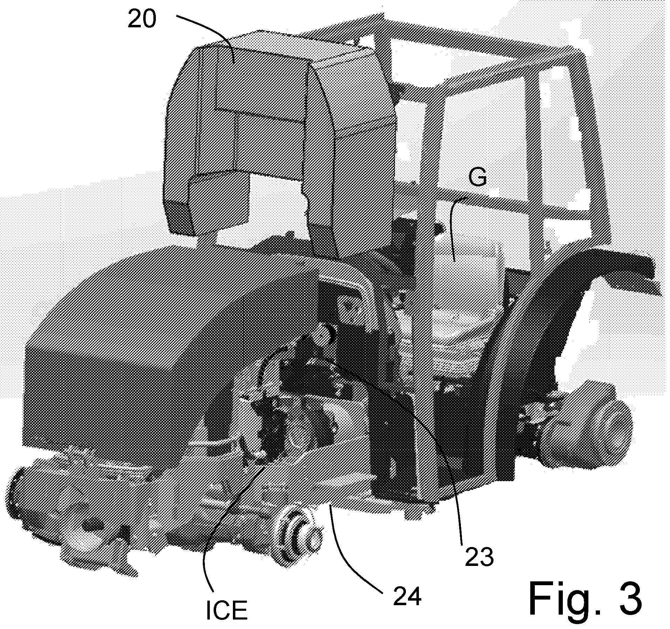

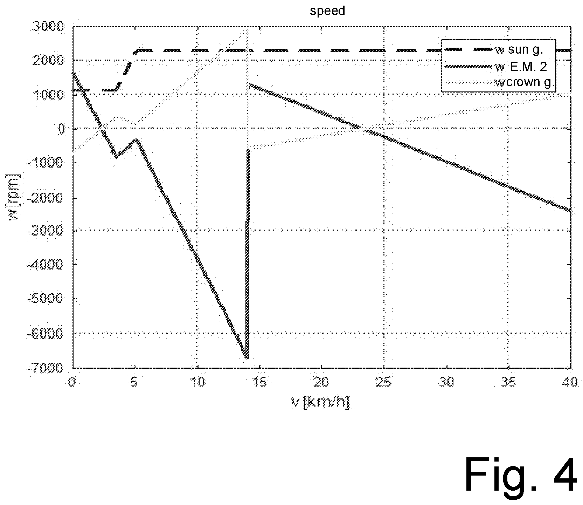

As illustrated in figure 3, a battery pack 20 is carried by the hybrid drivetrain and preferably surrounds the latter above and / or laterally. The battery pack is preferably a preassembled module comprising storage cells 21 and also electronic / electric drives 22 and the control unit for controlling the hybrid drivetrain, the decoupleable joints C1 and C2 and, if present, the brake or lock of second stage crown gear 5. According to a preferred embodiment, the gearbox with discrete speed ratios is manually controlled by the driver and the hybrid drivetrain implements a continuously variable speed change to obtain a speed control controlled for example by an accelerator pedal. In particular, for each ratio of the gearbox with discrete ratios and at each angular position of the pedal or of another drive arranged in the driver's space, a vehicle speed corresponds and, preferably, the control unit keeps the IC engine at constant rotation speed and regulates the angular speed of the electric machines 1, 2 by recirculating electric power to obtain the relative speed of the tractor and, in case of excess electric power generated on the basis of the load applied to the tractor, to charge the battery pack or, conversely, if the load is high, take power from the battery pack (figure 4). In particular, below a threshold speed of the tractor, electric machine 2 acts as a brake-generator and imposes an acceleration ramp by circulating the electric power generated partially in batteries and partially to electric machine 1 that directly receives a share of power and, torque controlled, provides drive shaft D with an additional torque to transmit downstream the motion. Above the threshold speed of the tractor, electric machine 2 is instead of traction and receives the electric power partially from the batteries and in large part in recirculation of power from the electric machine 1 that acts as a generator in axis with the diesel engine on drive shaft D.

Upon request of the control unit, by opening the clutch the vehicle runs in full electric for a limited time by receiving power from the batteries, electric machine 1 supplies drive shaft D at approximately constant speed and electric machine 2 regulates the speed ranges. In the event of operation with the ICE off, joint C1 is opened or disconnected and, in the event of an electrical failure, second stage crown gear 5 is braked or mechanically locked to allow the ICE to drive both the power take-off and the hydraulic pump, and wheels / tracks.

Preferably, battery pack 20 is watertight since it is exposed at least partially to atmospheric agents and is arranged close to the driver's space in the frontal direction. Preferably, battery pack 20 rests against a dividing wall 23 delimiting the driver's space and on special base brackets 24 protruding from lateral parts opposite the propulsion unit. According to a preferred embodiment, battery pack 20 is isolated from vibrations by means of suitable elastic or visco-elastic joints 25.

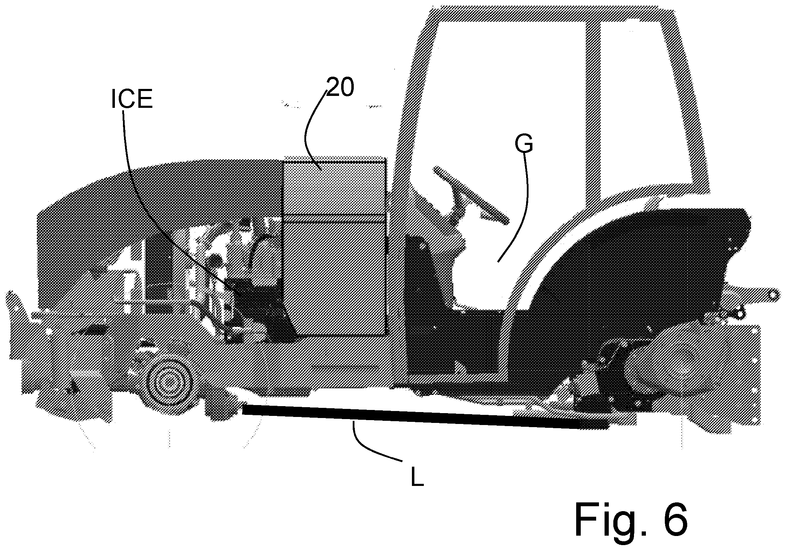

Figure 6 shows the specialized tractor with a wheelbase of less than 2500 mm and an all-wheel drive made by means of universal joints connected to a rear differential and a longitudinal shaft L

## Claims

1. Hybrid drivetrain for a tractor comprising:
- an internal combustion engine (ICE) having an output shaft (O) connected to a first disengageable joint (C1);
- a first electric machine (1) having a first rotor rigidly connected to a drive shaft (D) disconnectable from the output shaft (O) via the first joint (C1);
- a second electric machine (2) having a second rotor rigidly connected to a hollow shaft (H) housing the drive shaft (D);
- a spacer shaft (8) connected in torque transfer to the drive shaft (D) and disconnectable via a second disengageable joint (C2) from a PTO shaft (P);
- a planetary gear having:
A first stage crown gear (7) configured to be permanently rotationally fixed;
a first stage sun gear (6) rigidly connected to the hollow shaft (H);
a plurality of first stage planet gears carried by a second stage crown gear (5);
a second stage sun gear (3) permanently connected in direct drive to the drive shaft (D);
a plurality of second stage planet gears connected in torque transfer to a propulsion device (4) of the vehicle via a second stage carrier;
wherein the first electric machine (1) is opposite to the planetary gear with respect to the second electric machine (2) and the internal combustion engine,
the first and second electric machine and the planetary gear are frontally joined to define an overall oblong body.

2. Hybrid drivetrain according to claim 1, comprising a discrete gear shift with a primary shaft (4) defining the propulsion device, and a secondary shaft (S); configured with at least two between a direct drive, a reduced gear and a reverse gear; and defining a gear module with an epicyclic gear, such module being housed in the oblong body.

3. Hybrid drivetrain according to claim 2, wherein the spacer shaft (8) is housed within the propulsion device (4).

4. Hybrid drivetrain according to any of claims 2 or 3, wherein the planetary gear and the discrete gear shift are inside a housing and the primary shaft (4) is connected to the second stage sun gear (3) via a first rolling bearing (10) and is supported by the housing via a second rolling bearing (11) and wherein the second stage crown gear (5) comprises a cantilevered sleeve (12) supported by a third rolling bearing (13) located between the first and the second rolling bearing (10, 11) along an axial direction.

5. Hybrid drivetrain according to any of the preceding claims, wherein the second stage sun gear (3) and the drive shaft (D) are coaxial.

6. Hybrid drivetrain according to any of the preceding claims, wherein the drive shaft (D) and the spacer shaft (8) are splined to the second stage sun gear (3).

7. Tractor comprising a hybrid drivetrain according to any of the preceding claims and an electronic control unit to operate the first and second disengageable joint (C1, C2) and control the speed of the tractor by varying the rotational speed of the internal combustion engine and / or the first electric machine and / or the second electric machine on the basis of a value of the tractor speed set by a driver and implementing a recirculation of the electric power between the first and second electric machine while the internal combustion engine is maintained in a predetermined range of operation.

8. Tractor according to claim 7, comprising a battery pack (20) connected in electric power transfer to at least one of the first and second electric machines and having an inverted 'U' shape surrounding the oblong body in front of a tractor driver zone (G).

9. Tractor according to claim 8, wherein the battery pack (20) is a pre-assembled module resistant to atmospheric agents, in particular to rain, and houses electric drives of the first and second electric machine.

10. Tractor according to one of claims 8 or 9, wherein the battery pack (20) rests on vibration dampers (25) arranged between the oblong body and / or a dividing wall (23) of the driver zone (G).

## Patentansprüche

1. Hybridantriebsstrang für einen Traktor, umfassend:
- einen Verbrennungsmotor (ICE) mit einer Ausgangswelle (O), die mit einer ersten lösbaren Verbindung (Cl) verbunden ist;
- eine erste elektrische Maschine (1) mit einem ersten Rotor, der starr mit einer Antriebswelle (D) verbunden ist, die über die erste Verbindung (Cl) von der Ausgangswelle (O) trennbar ist;
- eine zweite elektrische Maschine (2) mit einem zweiten Rotor, der starr mit einer Hohlwelle (H) verbunden ist, in der die Antriebswelle (D) untergebracht ist;
- eine Distanzwelle (8), die drehmomentübertragend mit der Antriebswelle (D) verbunden und über eine zweite lösbare Verbindung (C2) von einer PTO Welle (P) trennbar ist;
- ein Planetengetriebe:
- ein Kronenrad (7) der ersten Stufe, das derart konfiguriert ist, um drehfest befestigt zu werden;
- ein Sonnenrad (6) der ersten Stufe, das starr mit der Hohlwelle (H) verbunden ist;
- mehrere Planetenräder der ersten Stufe, die von einem Kronenrad (5) der zweiten Stufe getragen werden;
- ein Sonnenrad (3) der zweiten Stufe, das zum Direktantrieb mit der Antriebswelle (D) verbunden ist;
mehrere Planetenräder der zweiten Stufe, die zum Drehmomenttransfer über einen Träger der zweiten Stufe mit einer Antriebsvorrichtung (4) des Fahrzeugs verbunden sind;
wobei die erste elektrische Maschine (1) in Bezug auf die zweite elektrische Maschine (2) und den Verbrennungsmotor dem Planetengetriebe gegenüberliegt und die erste und die zweite elektrische Maschine sowie das Planetengetriebe stirnseitig verbunden sind, um einen insgesamt länglichen Körper zu definieren.

2. Hybridantriebsstrang nach Anspruch 1, der eine diskrete Gangschaltung mit einer Primärwelle (4), die die Antriebsleistung definiert, und eine Sekundärwelle (S) umfasst; der mit mindestens zwei Gängen zwischen einem Direktantrieb, einem Untersetzungsgetriebe und einem Rückwärtsgang konfiguriert ist; und der mit dem Planetengetriebe ein Getriebemodul definiert, wobei dieses Modul in dem länglichen Körper untergebracht ist.

3. Hybridantriebsstrang nach Anspruch 2, wobei die Distanzwelle (8) innerhalb der Antriebsvorrichtung (4) untergebracht ist.

4. Hybridantriebsstrang nach einem der Ansprüche 2 oder 3, wobei das Planetengetriebe und die diskrete Gangschaltung in einem Gehäuse angeordnet sind und die Primärwelle (4) mit dem Sonnenrad (3) der zweiten Stufe über ein erstes Wälzlager (10) verbunden sind und durch das Gehäuse über ein zweites Wälzlager (11) gestützt sind, und wobei das Kronenrad (5) der zweiten Stufe eine freitragende Hülse (12) umfasst, die durch ein drittes Wälzlager (13) gestützt ist, das zwischen dem ersten und dem zweiten Wälzlager (10, 11) entlang einer axialen Richtung angeordnet ist.

5. Hybridantriebsstrang nach einem der vorhergehenden Ansprüche, wobei das Sonnenrad (3) der zweiten Stufe und die Antriebswelle (D) koaxial sind.

6. Hybridantriebsstrang nach einem der vorhergehenden Ansprüche, wobei die Antriebswelle (D) und die Distanzwelle (8) mit dem Sonnenrad (3) der zweiten Stufe verzahnt sind.

7. Traktor, umfassend einen Hybridantriebsstrang gemäß einem der vorhergehenden Ansprüche und eine elektronische Steuereinheit zum Betätigen der ersten und zweiten lösbaren Verbindung (Cl, C2) und Steuern der Geschwindigkeit des Traktors durch Variieren der Drehzahl des Verbrennungsmotors und/oder der ersten elektrischen Maschine und/oder der zweiten elektrischen Maschine auf der Grundlage eines von einem Fahrer eingestellten Werts der Traktorgeschwindigkeit und Durchführen einer Rückführung der elektrischen Leistung zwischen der ersten und zweiten elektrischen Maschine, während der Verbrennungsmotor in einem vorgegebenen Betriebsbereich gehalten wird.

8. Traktor nach Anspruch 7, der eine Batterieeinheit (20) umfasst, die zur Übertragung elektrischer Energie mit mindestens einer der ersten und zweiten elektrischen Maschinen verbunden ist und die Form eines umgekehrten "U" hat, das den länglichen Körper vor einer Traktorfahrerzone (G) umgibt.

9. Traktor nach Anspruch 8, wobei die Batterieeinheit (20) ein vormontiertes, gegen Witterungseinflüsse, insbesondere Regen, beständiges Modul aufweist und elektrische Antriebe der ersten und zweiten elektrischen Maschine beherbergt.

10. Traktor nach einem der Ansprüche 8 oder 9, wobei die Batterieeinheit (20) auf Schwingungsdämpfern (25) ruht, die zwischen dem länglichen Körper und/oder einer Trennwand (23) der Fahrerzone (G) angeordnet sind.

## Revendications

1. Transmission hybride pour tracteur, comprenant:
- un moteur à combustion interne (ICE) avec un arbre de sortie (O) qui est relié à une première liaison amovible (Cl);
- une première machine électrique (1) avec un premier rotor, qui est relié rigidement à un arbre d'entraînement (D), qui peut être séparé de l'arbre de sortie (O) via la première liaison (Cl);
- une deuxième machine électrique (2) avec un deuxième rotor qui est relié rigidement à un arbre creux (H) dans lequel est logé l'arbre d'entraînement (D);
- un arbre d'écartement (8) qui est relié à l'arbre d'entraînement (D) par transmission de couple et peut être séparé d'un arbre PTO (P) par l'intermédiaire d'une deuxième liaison amovible (C2);
- un engrenage planétaire:
- un engrenage frontal de premier étage (7) configuré pour être fixe pour une rotation;
- un planétaire de premier étage (6) relié rigidement à l'arbre creux (H);
- une pluralité d'engrenages planétaires de premier étage portés par une couronne dentée de deuxième étage (5);
- un engrenage solaire de deuxième étage (3) relié à l'arbre d'entraînement (D) pour un entraînement direct;
une pluralité d'engrenages planétaires de deuxième étage reliés à un dispositif d'entraînement (4) du véhicule pour un transfert de couple via un support de deuxième étage;
dans lequel la première machine électrique (1) est opposée à l'engrenage planétaire par rapport à la deuxième machine électrique (2) et le moteur à combustion interne et les première et deuxième machines électriques et l'engrenage planétaire sont connectés à l'extrémité pour définir un corps globalement allongé.

2. Transmission hybride selon la revendication 1, comprenant un changement de vitesse discret avec un arbre primaire (4) définissant la puissance motrice et un arbre secondaire (S) qui est configuré avec au moins deux vitesses entre un entraînement direct, un réducteur et une marche arrière; et qui définit un module d'engrenage avec le train planétaire, ce module étant logé dans le corps allongé.

3. Transmission hybride selon la revendication 2, dans laquelle l'arbre d'écartement (8) est logé à l'intérieur du dispositif d'entraînement (4).

4. Transmission hybride selon l'une des revendications 2 ou 3, dans laquelle le train planétaire et le changement de vitesse discret sont disposés dans un boîtier et l'arbre primaire (4) est relié au planétaire (3) de deuxième étage via un premier roulement (10) et à travers lequel les boîtiers sont supportés via un deuxième roulement (11), et dans lequel la couronne dentée de deuxième étage (5) comprend un manchon en porte-à-faux (12) supporté par un troisième roulement (13) situé entre le premier et deuxième roulements (10, 11) sont disposés le long d'une direction axiale.

5. Transmission hybride selon l'une des revendications précédentes, dans lequelle le planétaire de deuxième étage (3) et l'arbre d'entraînement (D) sont coaxiaux.

6. Transmission hybride selon l'une des revendications précédentes, dans laquelle l'arbre d'entraînement (D) et l'arbre d'écartement (8) sont dentés avec le planétaire (3) de deuxième étage.

7. Tracteur, comprenant une transmission hybride selon l'une des revendications précédentes et une unité de commande électronique pour actionner les première et deuxième liaisons débrayables (Cl, C2) et contrôler la vitesse du tracteur en faisant varier le régime du moteur à combustion interne et/ou la première machine électrique et/ou la deuxième machine électrique sur la base d'une valeur de vitesse de tracteur définie par un conducteur et en effectuant une rétroaction de puissance électrique entre la première et la deuxième machine électrique tout en maintenant le moteur à combustion interne dans une plage de fonctionnement prédéterminée.

8. Tracteur selon la revendication 7, comprenant une unité de batterie (20) connectée à au moins une des première et deuxième machines électriques pour transmettre de l'énergie électrique et ayant la forme d'un « U » inversé supportant le corps allongé devant une zone d'entraînement (G) du tracteur.

9. Tracteur selon la revendication 8, dans lequel l'unité de batterie (20) comporte un module pré-assemblé résistant aux influences météorologiques, notamment à la pluie, et abritant les entraînements électriques des première et deuxième machines électriques.

10. Tracteur selon l'une des revendications 8 ou 9, dans lequel l'unité de batterie (20) repose sur des amortisseurs de vibrations (25) qui sont disposés entre le corps allongé et/ou une cloison (23) de la zone d'entrainement (G).
